# FASCICULE DE BREVET EUROPEEN

(11) **EP 3 045 505 B1**
(45) Date de publication et mention de la délivrance du brevet: **24.06.2020**
(21) Numéro de dépôt: 15151334.8
(22) Date de dépôt: 15.01.2015
(51) Int. Cl.: C09C 1/36, C09C 3/06, C09C 1/40, C09K 11/02

(54) **Matériau composite céramique**
Keramisches Verbundmaterial
Ceramic composite material

(43) Date de publication de la demande: 20.07.2016
(73) Titulaire: Hublot S.A., Genève, 1204 Genève (CH)
(72) Inventeur: BUTTET, Mathias, 1125 Monnaz (CH)
(74) Mandataire: Plasseraud IP

(56) Documents cités:
- US-A- 3 294 699
- US-A- 4 344 987
- US-B1- 7 526 928
- LLUSAR M ET AL: "Colour analysis of some cobalt-based blue pigments", JOURNAL OF THE EUROPEAN CERAMIC SOCIETY, ELSEVIER SCIENCE PUBLISHERS, BARKING, ESSEX, GB, vol. 21, no. 8, 1 août 2001 (2001-08-01), pages 1121-1130, XP027368820, ISSN: 0955-2219 [extrait le 2001-08-01]
- QUENARD O ET AL: "Synthesis, microstructure and oxidation of Co-MgAl2O4 and Ni-MgAl2O4 nanocomposite powders", NANOSTRUCTURED MATERIALS, ELSEVIER, NEW YORK, NY, US, vol. 7, no. 5, 1 janvier 1996 (1996-01-01) , pages 497-507, XP004008189, ISSN: 0965-9773, DOI: 10.1016/0965-9773(96)00026-8
- SABERI A ET AL: "A novel approach to synthesis of nanosize MgAl2O4 spinel powder through sol-gel citrate technique and subsequent heat treatment", CERAMICS INTERNATIONAL, ELSEVIER, AMSTERDAM, NL, vol. 35, no. 3, 1 avril 2009 (2009-04-01), pages 933-937, XP025915278, ISSN: 0272-8842, DOI: 10.1016/J.CERAMINT.2008.03.011 [extrait le 2008-07-02]

## Description

### DOMAINE DE L'INVENTION

La présente invention concerne les matériaux composites comprenant des céramiques, leur procédé de fabrication et leurs utilisations.

### ARRIERE-PLAN DE L'INVENTION

Les céramiques de couleur produites industriellement sont en général des oxydes d'aluminium (alumine) ou des oxydes de zirconium chargés et mélangés à un pigment. Un pigment est une substance colorante insoluble dans le milieu qu'elle colore. En particulier, les pigments sont utilisés pour colorer un matériau dans la masse.

Dans certains cas, les oxydes peuvent également être colorés directement par la création de défauts, tels que des atomes différents, dans la structure cristalline.

La production de composants en céramique colorée est maîtrisée pour certaines couleurs telles que le noir, le blanc, le bleu et le vert, mais pas pour toutes les couleurs.

Par exemple, malgré tous les efforts fournis, il n'a encore jamais été possible de produire de la céramique de couleur rouge vif. Il existe uniquement des déclinaisons de céramique rouge/orange ou rouge/brun.

En effet, le procédé de fabrication des céramiques colorées consiste à mélanger la céramique en poudre avec un pigment minéral puis à injecter l'ensemble dans des moules pour obtenir ce que l'on appelle un « corps vert » lié par un polymère. Ce corps vert est ensuite délianté, par exemple par chauffage à 600°C, le liant polymère étant alors sublimé. Le corps vert est finalement fritté à une température proche de la température de fusion de la céramique, provoquant ainsi sa densification et l'obtention d'une pièce solide.

Le taux de pigment utilisé varie en fonction de la couleur souhaitée, mais en général quelques pourcents volumiques, typiquement de l'ordre de 3% à 5%, sont suffisants pour colorer la céramique. En effet, pendant la phase de frittage, le pigment va en général diffuser dans la céramique qui est blanche et qui va ainsi prendre la couleur du pigment.

Cependant, lorsque le pigment ne diffuse pas dans la céramique, celle-ci apparaît blanche, ce qui diminue la puissance du pigment ajouté. Les couleurs ainsi obtenues sont en général pales et sans grand intérêt esthétique.

En particulier, il n'existe pas de pigment de couleur rouge qui puisse maintenir sa couleur après l'étape de frittage. Les couleurs obtenues tirent plutôt sur l'orange, le bordeaux, voire le brun.

La présente invention a notamment pour but de proposer de nouveaux procédés de fabrication de matériaux composites permettant d'élargir significativement la gamme de couleurs possibles dans la production de céramiques colorées.

Le document LLUSAR M ET AL, "Colour analysis of some cobalt-based blue pigments", JOURNAL OF THE EUROPEAN CERAMIC SOCIETY, ELSEVIER SCIENCE PUBLISHERS, BARKING, ESSEX, GB, vol. 21, no. 8, 1, août 2001, indique que l'efficacité de coloration dans différents émaux céramiques du pigment bleu olivine classique (Co₂Si0₄) a été comparée à celle obtenue avec une willemite dopée au cobalt (Co_{0.05}Zn_{1.95}Si0₄, et avec uns spinelle Co-Al dopée au magnésium (Mg_{0.2}Co_{0.8}Al₂0₄). Les pigments cuits et les échantillons émaillés ont été caractérisés par spectroscopie XRD, UV-VIS-NIR, mesures de couleur CIEL*a*b*, et par SEM/EDX. Les pigments Co-olivine et Co-willemite se sont dissous à un degré plus élevé dans les glasures fondues que la spinelle Co-Al. La couleur bleue plus foncée de la Co-olivine est principalement due aux ions Co²⁺ incorporés dans la matrice vitreuse. La composition de Co-willemite (qui ne contenait que 1,3 % en poids de Co) a développé la teinte de couleur la plus bleue de tous les pigments dans les émaux à double et simple cuisson, tandis que la spinelle Co-Al dopée au magnésium s'est révélée le pigment bleu le plus approprié dans la coloration en masse du grès cérame à cuisson rapide.

Le document US7526928 mentionne, dans son abrégé, une pierre précieuse ou un objet décoratif ayant au moins une surface portant un revêtement en film mince. Dans certains modes de réalisation, il est proposé une pierre précieuse ayant un aspect caractérisé par au moins deux zones de couleurs différentes, où ces deux zones sont de couleurs différentes. Dans d'autres modes de réalisation, deux zones différentes d'une pierre précieuse unique (par exemple, intégrale et monobloc) portent des revêtements de composition différente, et l'apparence résultante de la pierre précieuse est caractérisée par le fait que la pierre présente sensiblement une seule couleur de corps uniforme qui est différente de la couleur du corps de la pierre si elle n'était recouverte que de l'un ou de l'autre des revêtements.

### OBJETS DE L'INVENTION

A cet effet, l'invention a pour objet un procédé tel que défini dans la revendication 1. Des caractéristiques avantageuses sont définies dans les revendications dépendantes.

Grâce à ces dispositions, il est possible d'obtenir des matériaux composites céramiques avec une palette de couleurs très large, comprenant notamment des céramiques de couleur rouge vif. En effet, la matrice, qui est adaptée pour laisser passer la lumière c'est-à-dire qu'elle est transparente ou translucide, permet de laisser la couleur du pigment diffuser vers l'extérieur du matériau même si la particule de pigment est située en profondeur dans la matrice. Ceci a pour effet d'augmenter la surface de pigmentation du matériau et donc d'augmenter l'intensité de sa couleur.

### BREVE DESCRIPTION DES DESSINS

L'invention sera mieux comprise à la lecture de la description qui va suivre de plusieurs de ses modes de réalisation, donnés uniquement à titre d'exemples non limitatifs en se référant aux dessins joints, sur lesquels :
- la Figure 1 est une illustration schématique d'un exemple de procédé de fabrication d'un matériau composite selon un mode de réalisation de l'invention ; et
- la Figure 2 est une coupe cristallographique montrant un matériau composite selon l'exemple 1, ne correspondant pas à l'invention.

### DESCRIPTION PLUS DETAILLEE

Comme expliqué ci-dessus, l'invention concerne un procédé de fabrication d'un matériau composite destiné à être utilisé notamment en horlogerie ou joaillerie, ledit matériau combinant :
- un pigment minéral ; et
- une matrice céramique à base de zircone stabilisée à l'yttrium, la matrice étant adaptée pour laisser passer la lumière et présentant une température de densification sous pression inférieure à une température de détérioration du pigment minéral.

Le pigment minéral peut représenter une fraction volumique comprise entre 2% et 50% du matériau composite.

Le pigment minéral est choisi en fonction de la couleur souhaitée pour le matériau composite.

Pour le rouge, on choisit plutôt un pigment minéral sous forme de particules discrètes comprenant chacune un noyau et un revêtement coloré entourant le noyau. En effet, l'intensité de ces couleurs est trop faible pour colorer le matériau dans la masse.

Le noyau du pigment minéral est adapté pour laisser passer la lumière, c'est-à-dire qu'il est transparent ou translucide.

Ainsi, si une particule se trouve à la surface du matériau composite et qu'elle est polie, la couleur du revêtement reste visible à travers le noyau.

Par exemple, le noyau du pigment minéral peut être fabriqué à partir d'un matériau choisi parmi :
- le mica, par exemple la muscovite ou la biotite ;
- l'alumine Al₂O₃ ;
- la zircone ZrO₂ ;
- le dioxyde de titane TiO₂.

Le revêtement coloré peut être un oxyde comprenant du fer, du chrome, de l'aluminium, du titane, du silicium, du zinc, du nickel, du cobalt, du cadmium, du cuivre, du vanadium, du bismuth et/ou du manganèse.

Par exemple, il peut s'agir notamment :
- de KAl₂(AlSi₃O₁₀) (OH)₂ ;
- du TiO₂ ;
- du SiO₂ ;
- du ZnO.

Etant donné que la couleur et l'intensité du pigment dépendent de son taux d'oxydation, il est possible d'obtenir toutes les couleurs avec les composés ci-dessus.

Les couleurs connues sont le rouge, le jaune, le vert, le violet, le noir et le bleu.

L'épaisseur du revêtement coloré ainsi que les proportions des différents éléments composant le pigment minéral participent à déterminer sa couleur et l'intensité de celle-ci.

Des exemples de pigments rouges avec une base d'oxyde de titane et de mica sont donnés dans les documents suivants : US 4 344 987 A, US 5 522 923 A, et US 4 086 100 A.

Il est également possible d'utiliser des pigments minéraux qui possèdent des propriétés « interférentielles », c'est-à-dire qui présentent des tons de couleur différents en fonction de l'angle d'observation sous lequel ils sont vus.

Par exemple, de telles propriétés interférentielles peuvent être obtenues avec un pigment minéral comprenant un noyau en mica, un revêtement coloré d'oxyde composite comprenant du titane, du fer et du nickel entourant le noyau, et une couche de dioxyde de titane entourant le revêtement coloré.

Les pigments minéraux utilisés peuvent en outre présenter, par leur nature ou leur forme, d'autres effets de couleur, tels qu'un effet nacré.

Le pigment minéral peut présenter un diamètre moyen compris entre 0,2 µm et 10 µm.

Avantageusement, la température de détérioration du pigment minéral est supérieure à 1300°C. Cette température correspond à la température de décomposition du pigment minéral qui entraîne un changement de couleur de celui-ci, ou autrement dit à la température à laquelle la couleur du pigment minéral est altérée.

La matrice est choisie de telle sorte que sa température de densification sous pression soit inférieure à la température de détérioration du pigment minéral, donc avantageusement inférieure à 1300°C.

Les pigments luminescents ne résistent pas en général à des températures supérieures à 800°C dans une atmosphère inerte. Dans ce cas, il sera nécessaire d'augmenter la pression de densification de la matrice afin qu'elle puisse être densifiée à 800°C tout en restant transparente.

La matrice est adaptée pour laisser passer la lumière, c'est-à-dire qu'elle est transparente ou translucide. Pour cela, la matrice est par exemple préparée suivant des procédés connus pour les céramiques transparentes. Cette adaptation réside alors en particulier dans le choix de l'oxyde et dans les conditions de mise en forme, c'est-à-dire la température de densification et la pression.

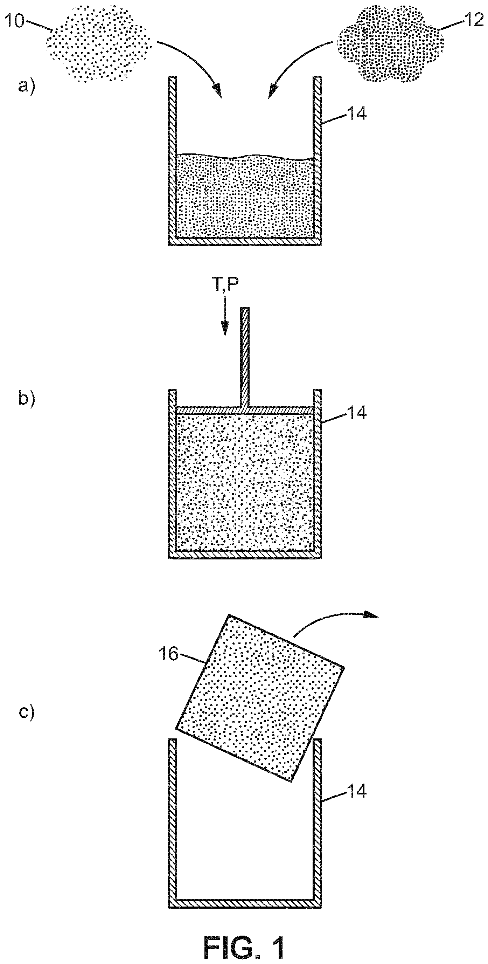

On peut fabriquer un matériau composite selon l'invention notamment par le procédé illustré sur la Figure 1 et comprenant les étapes suivantes :
a) mélange du pigment minéral 10 sous forme de poudre avec la matrice 12 sous forme de poudre dans un moule 14 ;
b) frittage du mélange de poudres sous une pression suffisante pour que la température de densification de la matrice 12 sous cette pression reste inférieure à la température de détérioration du pigment minéral 10 ;
c) retrait du matériau composite 16 du moule 14.

Ainsi, sous la pression et la chaleur, le pigment minéral est stable tandis que la matrice enrobe toutes les particules du pigment minéral.

La lumière diffusée à la surface du matériau composite est suffisante pour garantir une intensité de couleur satisfaisante.

Le frittage peut être réalisé sous pression uniaxiale à l'aide d'une presse SPS (« Spark Plasma Sintering ») dans laquelle la montée en température peut être effectuée en quelques minutes.

Il est également possible de terminer le frittage par frittage sous pression isostatique. Il s'agit dans un premier temps de presser le mélange de poudres pour en former des pastilles ou d'injecter des composants par une technique classique d'injection des céramiques, puis d'effectuer un premier frittage dont l'effet sera de fermer les porosités sans forcément terminer le procédé. Le frittage est alors finalisé dans un four qui peut être pressurisé sous gaz jusqu'à 200 MPa en général.

### Exemple 1 (ne correspondant pas à l'invention)

On utilise une poudre de spinelle d'aluminate de magnésium (MgAl₂O₄) ayant une taille de particules de 0,2 µm avec comme impuretés moins de 10 ppm de Fe, Ca, Na, et moins de 20 ppm de Si, par exemple celle produite par la société Baikowski sous la référence S30 CR.

Le dosage de pigment minéral peut varier de 5% à 30% en volume.

Le frittage du spinelle MgAl₂O₄ est généralement opéré à une température supérieure à 1800°C. Selon l'invention, afin de préserver le pigment minéral et conserver son intensité, le frittage est effectué à 1200°C, sous très haute pression, isostatique ou uniaxiale.

La densification du spinelle MgAl₂O₄ est possible dans cette zone de température, à condition que la pression soit supérieure à 100 MPa.

De plus, cette zone de température permet d'utiliser une large gamme de pigments sans les détériorer.

On obtient ainsi un matériau composite céramique dense avec une transparence qui permette d'utiliser la coloration du pigment minéral sur une profondeur de quelques dixièmes de millimètres, au lieu d'avoir uniquement l'effet de couleur par les particules de pigment en surface.

En particulier, on mélange 32,76 g de spinelle MgAl₂O₄ (S30 CR de Baikowski) avec 4,6 g de pigment rouge (noyau en TiO₂ avec un revêtement de KAl₂ (AlSi₃O₁₀) (OH)₂) pour obtenir un mélange avec 10% de pigment en volume. On remplit un moule en graphite de 30 mm de diamètre avec 4 g du mélange. On fritte le mélange sous pression pendant 5 min dans une presse SPS à 1200°C avec une force de 70 kN correspondant à une pression de 100 MPa. On obtient un disque de céramique dense de couleur rouge vif.

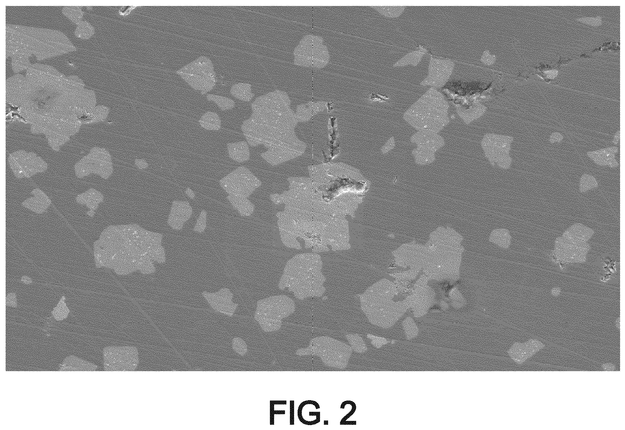

La coupe cristallographique représentée sur la Figure 2 a été réalisée en microscopie électronique à balayage (MEB), agrandissement x 1500, sur un échantillon d'un matériau composite fabriqué selon le procédé de l'exemple 1 poli par des particules de diamant jusqu'à 0,25 µm. Les zones claires correspondent aux particules de pigment.

### Exemple 2 (correspondant à l'invention)

On utilise de la zircone stabilisée à l'yttrium qui, après frittage à 1200°C sous une pression supérieure à 200 MPa, isostatique ou uniaxiale, peut mener à l'obtention d'une zircone transparente ou translucide.

Ainsi, en mélangeant jusqu'à 30% en volume de pigment rouge avec une zircone stabilisée à l'yttrium (ajout d'yttrium à hauteur de 8%), on obtient un effet similaire à celui obtenu avec le verre ou le spinelle MgAl₂O₄, c'est-à-dire une matrice transparente avec des pigments rouge emprisonnés à l'intérieur.

L'invention permet donc d'obtenir de nouveaux matériaux composites céramiques avec une très large gamme de couleurs.

En particulier, l'invention permet d'obtenir des céramiques colorées de couleur rouge vif, ce qui n'était pas possible jusqu'à présent.

En effet, tandis que la majorité des recherches effectuées dans la fabrication de la céramique rouge s'est focalisée sur l'obtention d'un pigment rouge qui puisse maintenir sa couleur après l'étape de frittage comme expliqué précédemment, dans la présente invention, c'est au contraire la matrice elle-même qui a fait l'objet d'une réflexion, à savoir utiliser une matrice dont la température de frittage reste inférieure à la température à laquelle la couleur du pigment minéral est altérée.

Les matériaux composites colorés de la présente invention trouveront leur application dans la fabrication, par exemple, des composants d'habillage des pièces horlogères, tel que les lunettes, les carrures, les boucles de bracelets, etc. L'avantage de ces matériaux dans cette application est leur résistance à l'usure et la garantie que la couleur des composants ne pourra pas être abimée par les contraintes imposées à la montre portée au poignet. La coloration étant effectuée à cœur, même si dans un cas extrême, la surface de la montre est rayée, la rayure en question n'aura pas une couleur différente de la surface, étant donné qu'il ne s'agit pas d'un revêtement mais d'une coloration dans la masse.

## Revendications

1. Procédé pour fabriquer un matériau composite (16) combinant un pigment minéral (10) et une matrice céramique (12),
la matrice céramique étant à base de zircone stabilisée à l'yttrium, ladite matrice (12) étant adaptée pour laisser passer la lumière,
le pigment minéral (10) étant sous forme de particules discrètes comprenant chacune un noyau et un revêtement coloré de couleur rouge entourant le noyau, le revêtement coloré étant un oxyde comprenant du fer, du chrome, de l'aluminium, du titane, du silicium, du zinc, du nickel, du cobalt, du cadmium, du cuivre du vanadium, du bismuth et/ou du manganèse,
le noyau du pigment minéral (10) étant adapté pour laisser passer la lumière et étant fabriqué à partir d'un matériau choisi parmi le mica, l'alumine, la zircone et le dioxyde de titane,
ledit procédé comportant les étapes suivantes :
a) mélange du pigment minéral (10) sous forme de poudre avec la matrice (12) sous forme de poudre ; et
b) frittage dudit mélange de poudres à une température de 1200 °C sous une pression supérieure à 200 MPa, suffisante pour que la température de densification de la matrice (12) sous ladite pression reste inférieure à la température de détérioration du pigment minéral (10).

2. Procédé selon la revendication 1, dans lequel le pigment minéral (10) représente une fraction volumique comprise entre 2% et 50% dudit matériau composite (16).

3. Procédé selon l'une quelconque des revendications précédentes, dans lequel le revêtement coloré est de formule KAl₂ (AlSi₃O₁₀) (OH)₂.

## Patentansprüche

1. Verfahren zur Herstellung eines Verbundmaterial (16), das ein Mineralpigment (10) und eine Keramikmatrix (12) kombiniert,
wobei die Keramikmatrix auf mit Yttrium stabilisiertem Zirkonoxid basiert, wobei die Matrix (12) dazu eingerichtet ist das Licht durchzulassen,
wobei das Mineralpigment (10) in Form von diskreten Partikeln vorliegt, die jeweils einen Kern und eine den Kern umgebende farbige, rote Beschichtung umfassen, wobei die farbige Beschichtung ein Oxid ist, das Eisen, Chrom, Aluminium, Titan, Silizium, Zink, Nickel, Kobalt, Cadmium, Kupfer Vanadium, Wismut und/oder Mangan umfasst,
wobei der Kern des Mineralpigments (10) dazu eingerichtet ist das Licht durchzulassen und aus einem Material hergestellt ist, das ausgewählt ist aus Glimmer, Aluminiumoxid, Zirkonoxid und Titandioxid,
wobei das Verfahren die folgenden Schritte umfasst:
a) Mischen des Mineralpigments (10) in Pulverform mit der Matrix (12) in Pulverform; und
b) Sintern der Pulvermischung bei einer Temperatur von 1200 °C unter einem Druck über 200 MPa, der ausreicht, damit die Verdichtungstemperatur der Matrix (12) unter dem Druck unter der Verschlechterungstemperatur des Mineralpigments (10) bleibt.

2. Verfahren nach Anspruch 1, bei dem das Mineralpigment (10) einen Volumenanteil zwischen 2% und 50% des Verbundmaterials (16) darstellt.

3. Verfahren nach einem der vorhergehenden Ansprüche, bei dem die farbige Beschichtung von der Formel KAl₂(AlSi₃O₁₀)(OH)₂ ist.

## Claims

1. Method for manufacturing a composite material (16) combining a mineral pigment (10) and a ceramic matrix (12),
the ceramic matrix being based on zirconia stabilised with yttrium, said matrix (12) being adapted to allow light to pass,
the mineral pigment (10) being in the form of discrete particles each comprising a nucleus and a red coloured coating surrounding the nucleus, the coloured coating being an oxide comprising iron, chromium, aluminium, titanium, silicon, zinc, nickel, cobalt, cadmium, copper, vanadium, bismuth and/or manganese,
the nucleus of the mineral pigment (10) being adapted to allow light to pass and being manufactured from a material chosen among mica, alumina, zirconia and titanium dioxide,
said method including the following steps:
a) mixing the mineral pigment (10) in powder form with the matrix (12) in powder form; and
b) sintering said powder mixture at a temperature of 1200°C under a pressure greater than 200 MPa, sufficient for the densification temperature of the matrix (12) under said pressure to remain less than the degradation temperature of the mineral pigment (10).

2. Method according to claim 1, wherein the mineral pigment (10) represents a volume fraction between 2% and 50% of said composite material (16).

3. Method according to any one of the preceding claims, wherein the coloured coating is of formula KAl₂(AlSi₃O₁₀)(OH)₂.
